# EUROPÄISCHE PATENTSCHRIFT

(11) **EP 2 334 948 B1**
(45) Veröffentlichungstag und Bekanntmachung des Hinweises auf die Patenterteilung: **17.02.2016**
(21) Anmeldenummer: 09744922.7
(22) Anmeldetag: 27.08.2009
(51) Int. Cl.: B60K 6/40, B60K 6/48

(54) **DREHMOMENTÜBERTRAGUNGSEINRICHTUNG**
TORQUE TRANSMISSION UNIT
DISPOSITIF DE TRANSMISSION DE COUPLE DE ROTATION

(30) Priorität: 11.09.2008 DE 102008046790
(43) Veröffentlichungstag der Anmeldung: 22.06.2011
(73) Patentinhaber: Schaeffler Technologies AG & Co. KG, 91074 Herzogenaurach (DE)
(72) Erfinder: RUDER, Willi, 77933 Lahr (DE); MACKOWIAK, Stefan, 76316 Malsch (DE); DILZER, Martin, 77815 Bühl (DE)
(86) Internationale Anmeldenummer: PCT/DE2009/001204
(87) Internationale Veröffentlichungsnummer: WO 2010/028620

(56) Entgegenhaltungen:
- EP-A1- 1 094 218
- US-A1- 2007 278 029
- US-B1- 6 302 253

## Beschreibung

Die Erfindung betrifft eine Drehmomentübertragungseinrichtung mit einer einem Verbrennungsmotor drehfest zuordenbaren ersten Schwungmasse und einer der ersten Schwungmasse nachgeschalteten und einem Getriebe zuordenbaren zweiten Schwungmasse.

Drehmomentübertragungseinrichtungen sind bekannt und dienen zum Übertragen von Drehmomenten zwischen dem Verbrennungsmotor und dem Getriebe. Zum Reduzieren von dabei auftretenden Drehschwingungen können die Schwungmassen relativ verdrehbar einander zugeordnet sein. Ferner ist es bekannt, zum Reduzieren der Drehschwingungen eine Fliehkraftpendeleinrichtung vorzusehen. Aus der deutschen Offenlegungsschrift DE 10 2006 028 556 A1 ist eine Drehmomentübertragungseinrichtung mit einem Drehschwingungsdämpfer und einer Fliehkraftpendeleinrichtung bekannt, die in axialer Richtung zwischen einer Energiespeichereinrichtung und einer Gegendruckplatte einer Kupplung angeordnet ist. In einem anderen Ausführungsbeispiel ist gezeigt, dass die Fliehkraftpendeleinrichtung auch radial innerhalb der Energiespeichereinrichtung angeordnet sein kann.

Dokument US6302253 B1 offenbart eine ähnliche Drehmomentübertragungsvorrichtung, wobei die zweite Schwungmasse einen Rotor eine Elektromaschine aufweist.

Aufgabe der Erfindung ist es, eine verbesserte Drehmomentübertragungseinrichtung bereitzustellen, insbesondere für Hybridanwendungen, bei denen ein Verbrennungsmotor und ein Elektromotor vorgesehen sind.

Die Aufgabe ist bei einer Drehmomentübertragungseinrichtung mit einer einem Verbrennungsmotor drehfest zuordenbaren ersten Schwungmasse und einer der ersten Schwungmasse nachgeschalteten und einem Getriebe zuordenbaren zweiten Schwungmasse dadurch gelöst, dass die zweite Schwungmasse einen Rotor einer Elektromaschine zum Übertragen eines elektrisch erzeugbaren Drehmoments auf die zweite Schwungmasse und eine Fliehkraftpendeleinrichtung zum Reduzieren von Drehschwingungen aufweist. Die erste Schwungmasse kann mittels des Verbrennungsmotors angetrieben werden und über diese die nachgeschaltete zweite Schwungmasse, wobei vorteilhaft Drehmomente zwischen dem Verbrennungsmotor und dem Getriebe übertragbar sind. Vorteilhaft kann mittels der Elektromaschine zusätzlich ein elektrisches Antriebs- oder Bremsmoment auf die zweite Schwungmasse übertragen werden. Dieses Drehmoment kann auf das Getriebe und/oder den Verbrennungsmotor übertragen werden, beispielsweise zum Antreiben oder Bremsen eines mit der Drehmomentübertragungseinrichtung ausgestatteten Kraftfahrzeugs. Außerdem ist es möglich, mittels der Elektromaschine den Verbrennungsmotor anzulassen. Bei der Elektromaschine kann es sich um einen Elektromotor, beispielsweise eine Synchron- oder Asynchronmaschine, einen Generator, beispielsweise einen Startergenerator, handeln. Vorteilhaft kann mittels der Drehmomentübertragungseinrichtung eine Parallel-Hybridanordnung für das mit dieser ausrüstbare Kraftfahrzeug realisiert werden. Dabei können vorteilhaft mittels der vorgesehenen Fliehkraftpendeleinrichtung beim Betrieb des Verbrennungsmotors beziehungsweise beim Übertragen von Drehmomenten zwischen dem Verbrennungsmotor und dem Getriebe auftretende Drehschwingungen reduziert werden, insbesondere getilgt werden. Die Fliehkraftpendeleinrichtung kann wie in der DE 10 2006 028 556 A1 offenbart ausgeführt sein. Diese Druckschrift, insbesondere die Figuren sowie die zugehörige Figurenbeschreibung, werden durch Bezugnahme zum Inhalt dieser Anmeldung gemacht. Unter Reduzieren von Drehschwingungen kann eine Schwingungsisolation von beim Betrieb des Verbrennungsmotors auftretenden Drehschwingungen, ein Tilgen und/oder ein Dämpfen der Drehschwingungen verstanden werden. Die zweite Schwungmasse kann vorteilhaft so dem Getriebe zugeordnet sein, dass zwischen dem Getriebe und der zweiten Schwungmasse Drehmomente übertragbar sind, beispielsweise die beim Betrieb des Verbrennungsmotors und/oder der Elektromaschine erzeugbaren Drehmomente.

Bei einem Ausführungsbeispiel der Drehmomentübertragungseinrichtung ist vorgesehen, dass die erste Schwungmasse und die zweite Schwungmasse mittels einer Energiespeichereinrichtung einander relativ verdrehbar zuordenbar oder zugeordnet sind. Vorteilhaft können die erste Schwungmasse, die zwischengeschaltete Energiespeichereinrichtung und die zweite Schwungmasse nach dem Prinzip eines sogenannten Zweimassenschwungrads Drehschwingungen dämpfen.

Bei einem weiteren Ausführungsbeispiel der Drehmomentübertragungseinrichtung ist vorgesehen, dass zwischen die erste Schwungmasse und die zweite Schwungmasse eine Trennkupplung geschaltet ist. Vorteilhaft kann mittels der Trennkupplung ein Energiefluss beziehungsweise eine Übertragung eines Drehmoments zwischen dem Verbrennungsmotor und der zweiten Schwungmasse wahlweise abgetrennt oder hergestellt werden. Bei geschlossener Trennkupplung ist eine Drehmomentübertragung zwischen dem Verbrennungsmotor und dem Getriebe möglich. Bei geöffneter Trennkupplung läuft der Verbrennungsmotor frei, kann beispielsweise abgeschaltet werden, wobei vorteilhaft die zweite Schwungmasse dennoch entweder frei läuft oder mittels der Elektromaschine antreibbar oder abbremsbar ist. Es ist denkbar, dass die Trennkupplung einen Teil der ersten Schwungmasse aufweist, also bei geöffneter Kupplung die erste Schwungmasse nur teilweise dem Verbrennungsmotor zugeordnet ist. Dabei ist es denkbar, die bei geöffneter Trennkupplung verbleibende erste Schwungmasse so auszulegen, dass der Verbrennungsmotor nicht lauffähig ist, also bei geöffneter Trennkupplung der Verbrennungsmotor stets stillsteht. Dies kann insbesondere zum Wiederanlassen des Verbrennungsmotors sinnvoll sein, da sich aufgrund der stark reduzierten Motor-Schwungmasse, also der vor der Trennkupplung verbleibende Anteil der ersten Schwungmasse besonders schnelle Wiederanlasszeiten des Verbrennungsmotors ergeben.

Bei einem weiteren Ausführungsbeispiel der Drehmomentübertragungseinrichtung ist vorgesehen, dass mittels der Energiespeichereinrichtung der zweiten Schwungmasse zum Einspeichern und Abgeben von Energie eine dritte Schwungmasse relativ verdrehbar zugeordnet ist. Vorteilhaft können nach dem Prinzip eines Zweimassenschwungrads Drehschwingungen gedämpft werden.

Bei einem weiteren Ausführungsbeispiel der Drehmomentübertragungseinrichtung ist vorgesehen, dass mittels der Trennkupplung die dritte Schwungmasse der ersten Schwungmasse zuordenbar und von dieser trennbar ist. Vorteilhaft kann bei geschlossener Trennkupplung die dritte Schwungmasse als Teil der ersten Schwungmasse wirken, beispielsweise um den Verbrennungsmotor betriebsfähig zu halten. Die sich aus der dritten Schwungmasse und der ersten Schwungmasse ergebende Gesamtschwungmasse ist über die Energiespeichereinrichtung der zweiten Schwungmasse relativ verdrehbar zugeordnet. Vorteilhaft ergibt sich bei geschlossener Trennkupplung ein Drehschwingungsdämpfer nach dem Prinzip eines Zweimassenschwungrads. Die Energiespeichereinrichtung kann beispielsweise zum Koppeln, Energie-Speichern und -Dämpfen von Drehschwingungen zwischen der ersten, mit der dritten gekoppelten Schwungmasse und der zweiten Schwungmasse zumindest eine oder eine Vielzahl von Bogenfedern aufweisen.

Bei einem weiteren Ausführungsbeispiel der Drehmomentübertragungseinrichtung ist vorgesehen, dass der Rotor der Elektromaschine die Fliehkraftpendeleinrichtung aufweist. Vorteilhaft kann die Fliehkraftpendeleinrichtung über den Rotor der zweiten Schwungmasse zugeordnet sein und beim Übertragen der Drehmomente Drehschwingungen reduzieren.

Bei einem weiteren Ausführungsbeispiel der Drehmomentübertragungseinrichtung ist vorgesehen, dass die Fliehkraftpendeleinrichtung radial außerhalb einer Zwischenwelle der zweiten Schwungmasse angeordnet ist. Mittels der Zwischenwelle können die auftretenden Drehmomente übertragen werden. Vorteilhaft kann die Fliehkraftpendeleinrichtung möglichst weit radial außerhalb der Zwischenwelle angeordnet sein, so dass auf diese wirkende Fliehkräfte besonders groß sind, wobei vorteilhaft sich eine besonders gute Wirkung der Fliehkraftpendeleinrichtung ergibt.

Bei einem weiteren Ausführungsbeispiel der Drehmomentübertragungseinrichtung ist vorgesehen, dass der zweiten Schwungmasse zumindest ein Element der folgenden Gruppe nachgeschaltet ist: Eine Anfahrkupplung, ein Handschaltgetriebe, beispielsweise auch automatisiert, ein Stufenautomatgetriebe, ein Stufenautomatgetriebe mit Wandler, ein Doppelkupplungsgetriebe, ein CVT Getriebe. Die Anfahrkupplung und/oder die Trennkupplung können als konventionelle oder als selbst nachstellende Kupplungen (SAC) ausgeführt sein. Vorteilhaft kann mittels der Anfahrkupplung ein mit der Drehmomentübertragungseinrichtung ausgestattetes Kraftfahrzeug auf bekannte Art und Weise anfahren und ein Synchronisieren von Gängen eines nachgeschalteten Schaltgetriebes ermöglichen. Vorteilhaft sind verschiedene Hybridanordnungen mit einer Anfahrkupplung und einem Schaltgetriebe und/oder einem Doppelkupplungsgetriebe, einem Stufenautomatgetriebe und/oder einem Stufenautomatgetriebe mit Wandler oder einem CVT Getriebe möglich.

Bei einem weiteren Ausführungsbeispiel der Drehmomentübertragungseinrichtung ist vorgesehen, dass die Fliehkraftpendeleinrichtung axial benachbart zu einem starren Schwungrad, insbesondere einer Gegendruckplatte, der Anfahrkupplung angeordnet ist. Vorteilhaft ein neben der Gegendruckplatte verbleibender Bauraum genutzt werden.

Bei einem weiteren Ausführungsbeispiel der Drehmomentübertragungseinrichtung ist vorgesehen, dass die Fliehkraftpendeleinrichtung axial zwischen der Anfahrkupplung und der Elektromaschine angeordnet ist. Vorteilhaft kann ein verbleibender axialer Bauraum zwischen der Elektromaschine und der Anfahrkupplung zur Positionierung der Fliehkraftpendeleinrichtung ausgenutzt werden.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigt:

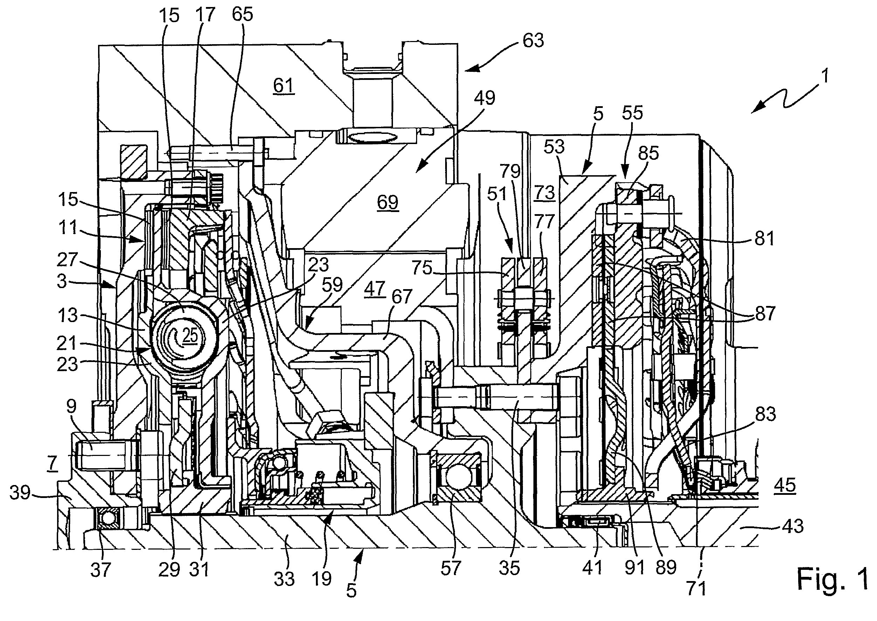

Figur 1 eine Drehmomentübertragungseinrichtung mit einer Elektromaschine im Halbschnitt.

Figur 1 zeigt eine Drehmomentübertragungseinrichtung 1 mit einer ersten Schwungmasse und einer zweiten, dieser nachgeschalteten Schwungmasse 5. Die erste Schwungmasse 3 ist einem in Figur 1 mittels des Bezugszeichens 7 angedeuteten Verbrennungsmotor 7 drehfest zuordenbar, beispielsweise mittels eines Flansches 9. Der ersten Schwungmasse 3 ist eine Trennkupplung 11 zugeordnet. Die Trennkupplung 11 ist Teil der ersten Schwungmasse 3 und weist zum drehfesten Verbinden der ersten Schwungmasse 3 mit einer dritten Schwungmasse 13 Kupplungsbeläge 15 und eine zum Anpressen dieser ausgelegten Druckplatte 17 auf. Die Druckplatte 17 beziehungsweise die Trennkupplung 11 kann mittels einer hydraulischen Betätigungseinrichtung 19 hydraulisch betätigbar ausgelegt sein. Die dritte Schwungmasse 13 ist mittels einer Energiespeichereinrichtung 21 zum Übertragen eines Drehmoments relativ verdrehbar der zweiten Schwungmasse 5 zugeordnet. Die dritte Schwungmasse 13 weist zum Umschließen der Energiespeichereinrichtung 21 zwei Blechteile 23 auf. Mittels der Blechteile 23 kann ein Fettraum 25 für Bogenfedern 27 der Energiespeichereinrichtung 21 gebildet werden. Über die Bogenfedern 27 der Energiespeichereinrichtung 21 sind die dritte Schwungmasse 13 und die zweite Schwungmasse 5 federbedämpft und relativ verdrehbar einander zugeordnet. Bei geschlossener Trennkupplung 11 ergibt sich ein schwingungsfähiges System zwischen einer die erste Schwungmasse 3 und die dritte Schwungmasse 13 aufweisenden Gesamtschwungmasse und der zweiten Schwungmasse 5.

Die zweite Schwungmasse 5 weist einen mit den Bogenfedern 27 der Energiespeichereinrichtung 21 in Eingriff stehenden Ausgangsflansch 29 auf. Der Ausgangsflansch 29 ist zum Übertragen eines Drehmoments einer Nabe 31 der zweiten Schwungmasse 5 drehfest zugeordnet. Die Nabe 31 ist wiederum drehfest mittels einer Verzahnung einer Zwischenwelle 33 der zweiten Schwungmasse zugeordnet. Die Zwischenwelle 33 ist mittels eines ersten Pilotlagers 37 in einer Kurbelwelle 39 des Verbrennungsmotors 7 und mittels eines zweiten Zwischenwellenlagers 57 gelagert. Die Zwischenwelle 33 weist einen Zwischenflansch 35 auf, der die Zwischenwelle 33 mit einem Rotor 47 einer Elektromaschine 49, einer Fliehkraftpendeleinrichtung 51 sowie einer Gegendruckplatte 53 einer Anfahrkupplung 55 drehfest koppelt. Das Zwischenwellenlager 57 ist mittels eines Lagerblechs 59 fest einem Gehäuseteil 61 eines Gehäuses 63 der Drehmomentübertragungseinrichtung 1 zugeordnet. Hierzu kann das Lagerblech 59 dem Gehäuseteil 61 des übrigen Gehäuses 63 mittels einer Verschraubung 65 fest zugeordnet sein. Die Getriebeeingangswelle 43 wird über ein Pilotlager 41 an der Zwischenwelle 33 gelagert.

Das Lagerblech 59 ist gestuft ausgeführt und bildet ein Teilgehäuse für die Trennkupplung 11, die Energiespeichereinrichtung 21 sowie die hydraulische Betätigungseinrichtung der Trennkupplung 11. Radial außerhalb einer Stufe 67 des Lagerblechs 59 des Gehäuses 63, also außerhalb des Teilgehäuses der Trennkupplung 11, ist der Rotor 47 der Elektromaschine 49 angeordnet. Radial außerhalb des Rotors 47 und innerhalb des Gehäuses 63 ist eine Erregereinrichtung 69 der Elektromaschine 49 angeordnet.

Die Fliehkraftpendeleinrichtung 51 ist axial zwischen dem Rotor 47 der Elektromaschine 49 und der Gegendruckplatte 53 der Anfahrkupplung 55 angeordnet. Die Begriffe axial und radial können sich auf eine Drehachse 71 der Drehmomentübertragungseinrichtung 1 beziehen. Axial kann dabei zum Beschreiben einer Richtung oder parallel zu der Drehachse 71 der Drehmomentübertragungseinrichtung 1 dienen. Die Fliehkraftpendeleinrichtung 51 ist benachbart zur Elektromaschine 49 beziehungsweise zu dem Rotor 47 der Elektromaschine 49 und benachbart zur Gegendruckplatte 53 der Anfahrkupplung 55 sowie radial außerhalb der Zwischenwelle 33 angeordnet. Alternativ ist es denkbar, die Fliehkraftpendeleinrichtung 51 direkt dem Rotor 47 und/oder der Zwischenwelle 33 und/oder der Gegendruckplatte 53 der Anfahrkupplung 55 zuzuordnen.

Die Fliehkraftpendeleinrichtung 51 ist in einem weitgehend fettfreien Raum 73 angeordnet und umfasst mehrere Pendelmassen 75, 77. Die Pendelmassen 75, 77 sind, zum Beispiel mit Hilfe von Laufrollen bewegbar, an einem Trägerflansch 79 der Fliehkraftpendeleinrichtung 51 angebracht. Der Trägerflansch 79 ist Teil des Zwischenflansches 35 und mittels diesem drehfest der Zwischenwelle 33, also der zweiten Schwungmasse 5, zugeordnet. Die Fliehkraftpendeleinrichtung 51 umfasst vorzugsweise mehrere, zum Beispiel vier Pendelmassen 75, 77 oder Pendelmassenpaare, die gleichmäßig über den Umfang des Trägerflanschs 79 verteilt sind. Die Fliehkraftpendeleinrichtung 51 kann so ausgeführt sein, wie die diversen Fliehkraftpendeleinrichtungen, die in der deutschen Offenlegungsschrift DE 10 2006 028 556 A1 offenbart sind. Die Fliehkraftpendeleinrichtung 51 kann aber auch wie andere herkömmliche Fliehkraftpendeleinrichtungen ausgeführt sein.

Die Anfahrkupplung 55 weist einen Deckel 81 und eine mittels eines Ausrückers 83 betätigbare Gegendruckplatte 85 auf. Mittels der Anfahrkupplung 55 kann auf bekannte Art und Weise ein Drehmoment von der Zwischenwelle 33 mittels Kupplungsbelägen 87, einer Kupplungsscheibe 89 sowie einer Kupplungsnabe 91 ein Drehmoment auf die Getriebeeingangswelle 43 übertragen werden oder die Getriebeeingangswelle 43 von der Zwischenwelle 33 getrennt werden.

Bei geöffneter Trennkupplung 11 und bei geschlossener Anfahrkupplung 55 ist die Elektromaschine 49 drehfest dem Getriebe 45 zugeordnet, kann also beispielsweise zum Antreiben oder Abbremsen, insbesondere zur Rekuperation, des mit der Drehmomentübertragungseinrichtung 1 ausgestatteten Kraftfahrzeuges dienen.

Bei geöffneter Trennkupplung 11 und geöffneter Anfahrkupplung 55 sind sowohl der Verbrennungsmotor 7 als auch die Elektromaschine 49 gänzlich vom Getriebe 45, also vom übrigen Triebstrang des Kraftfahrzeugs abgetrennt. Dieser Zustand kann beispielsweise im Stillstand des Kraftfahrzeugs ausgenutzt werden. Bei geschlossener Trennkupplung 11 und geöffneter Anfahrkupplung 55 ist ebenfalls ein Stillstehen des Kraftfahrzeugs möglich, wobei der Verbrennungsmotor 7 in Betrieb gehalten werden kann, beispielsweise um einen mittels der Anfahrkupplung 55 gesteuerten beziehungsweise geregelten Anfahrvorgang durchzuführen. Bei stillstehendem Verbrennungsmotor 7 und fahrendem Kraftfahrzeug ist es denkbar, den Verbrennungsmotor 7 mittels Schließen der Anfahrkupplung 55 anzulassen.

Bei geöffneter Trennkupplung 11 und geschlossener Anfahrkupplung 55 ist es möglich, den Verbrennungsmotor 7 frei laufen zu lassen, insbesondere stillstehen zu lassen. Vorteilhaft kann mittels Schließen der Trennkupplung 11 der Verbrennungsmotor 7 angelassen werden. Dieser Vorgang kann mittels der Elektromaschine 49 der Drehenergie der zweiten Schwungmasse 5 und/oder mittels des sich in Bewegung befindlichen Kraftfahrzeugs unterstützt werden. Außerdem ist es denkbar, bei geschlossener Trennkupplung 11 und geöffneter Anfahrkupplung 55 den Verbrennungsmotor 7 mittels der Elektromaschine 49 anzulassen. Ferner ist es denkbar, auch in diesem Betriebszustand mittels des Verbrennungsmotors 7, beispielsweise bei stillstehendem Kraftfahrzeug, eine nicht näher dargestellte Batterie beziehungsweise einen Energiespeicher, insbesondere einen Kondensator, des Kraftfahrzeugs zur Speicherung von elektrischer Energie aufzuladen.

Die mittels der Energiespeichereinrichtung 21 gekoppelten Schwungmassen 3, 5, 13 können vorteilhaft ein schwingungsfähiges System nach dem Zweimassenschwungradprinzip bilden und damit Drehschwingungen dämpfen beziehungsweise eine Schwingungsisolation des Verbrennungsmotors 7 ermöglichen. Zusätzlich ist mittels der Fliehkraftpendeleinrichtung 51 eine weitere Schwingungsisolation möglich. Die Fliehkraftpendeleinrichtung 51 wirkt wie ein Tilger, dessen Steifigkeit vorteilhaft durch die Fliehkraft beeinflusst beziehungsweise erzeugt wird. Vorteilhaft ist eine Eigenfrequenz der Fliehkraftpendeleinrichtung 51 proportional einer Drehzahl. Dies ermöglicht vorteilhaft, durch eine entsprechende Abstimmung von Tilgereigenschaften der Fliehkraftpendeleinrichtung 51 ausgewählte Anregungsordnungen sehr effizient zu bekämpfen. Durch den zusätzlichen Einsatz der Fliehkraftpendeleinrichtung 51 kann auf ein Schlupfen der Anfahrkupplung 55 zum Erreichen einer erforderlichen Isolation verzichtet werden oder zumindest weitestgehend verzichtet werden.

Bei Anwendungen für Hybridantriebe, wie in Figur 1 dargestellt, kann die Fliehkraftpendeleinrichtung 51 vorteilhaft vor der, ein starres Schwungrad bildende Gegendruckplatte 53 der Anfahrkupplung 55, platziert werden. Hierzu kann die Fliehkraftpendeleinrichtung 51 entweder an der Gegendruckplatte 53, an der Zwischenwelle 33 und/oder an dem Rotor 47 der Elektromaschine 49 angebunden werden. Vorteilhaft kann zusätzlich eine Grundisolation mittels der der dritten Schwungmasse 13 zugeordneten Energiespeichereinrichtung 21 erfolgen, wobei die dritte Schwungmasse 13 eine Kupplungsscheibe der Trennkupplung 11 darstellt.

Vorteilhaft ist die zusätzliche Masse der Fliehkraftpendeleinrichtung 51 bei geöffneter Trennkupplung 11 nicht dem Verbrennungsmotor 7 zugeordnet, wobei eine dabei verbleibende Schwungmasse des Verbrennungsmotors 7 möglichst klein wird, was ein möglichst schnelles Wiederanlassen des Verbrennungsmotors 7 ermöglicht. Das zu beschleunigende Massenträgheitsmoment des Verbrennungsmotors 7 kann vorteilhaft minimiert werden. Vorteilhaft sind primäre Massenträgheitsmomente minimiert. Diese geringe Primärmasse ermöglicht vorteilhaft eine geringe Wiederstartzeit des Verbrennungsmotors. Vorteilhaft kann die erste Schwungmasse 3 ein starres, massenträgheitsoptimiertes Schwungrad des Verbrennungsmotors 7 bilden.

Es kann vorteilhaft ein Hybridantrieb für ein Fahrzeug, insbesondere Kraftfahrzeug, mit einem automatisierten und/oder teilautomatisierten Schaltgetriebe, so genanntes "Clutch-by-wire" durch den Einbau der zusätzlichen Trennkupplung 11 erzielt werden. Vorteilhaft können die geforderten Isolationsanforderungen mittels der Energiespeichereinrichtung 21 und der Fliehkraftpendeleinrichtung 51 zusammen erfüllt werden.

Über ein auf der Kurbelwelle 39 sitzendes starres Schwungrad beziehungsweise der ersten Schwungmasse 3 und die darauf befestigte Trennkupplung 11 wird die Kupplungsscheibe der Trennkupplung 11, also die dritte Schwungmasse 3 angetrieben. Diese Trennkupplung 11 ermöglicht das Trennen des Verbrennungsmotors 7 von dem Getriebe 45. Über die Verzahnung der Nabe 31 wird das Moment des Verbrennungsmotors 7 über die Zwischenwelle 33 auf die Anfahrkupplung 55 übertragen. Zusätzlich wird bei Bedarf durch die vorhandene Elektromaschine 49 ein weiteres Moment in die Anfahrkupplung 55 eingeleitet. Bei geöffneter Trennkupplung 11, wobei der Verbrennungsmotor 7 stillstehen kann, kann die Elektromaschine 49 das Fahrzeug auch selbstständig antreiben. Durch Schließen der Trennkupplung 11 kann der stillstehende Verbrennungsmotor 7 aus verschiedenen Fahrsituationen durch die Elektromaschine 49 wieder gestartet werden. Die Zwischenwelle 33 ist in der Kurbelwelle 39 mittels des ersten Pilotlagers 37 und über eine zusätzliche Abstützung beziehungsweise des Lagerblechs 59 mittels des Zwischenlagers 57 am Gehäuseteil 61 des Gehäuses 63 gelagert. Die Zwischenwelle 33 ist auf einer Primärseite der Anfahrkupplung 55 angeordnet und Teil der zweiten Schwungmasse 5. Die Anfahrkupplung 55 kann teil- oder vollautomatisiert angesteuert werden und kann konventionell oder als selbst nachstellende Kupplung (SAC) ausgeführt sein.

Ein Ausrücker der Trennkupplung 11 kann gehäusefest ausgeführt sein. Eine Lagerung der Getriebeeingangswelle 43 kann vorteilhaft über das zweite Pilotlager 41 in der Zwischenwelle 33 erfolgen.

Die Fliehkraftpendeleinrichtung 51 kann sowohl am Rotor 47 der Elektromaschine 49, an der Zwischenwelle 33 und/oder vor dem starren Schwungrad beziehungsweise der Gegendruckplatte 53 der Anfahrkupplung 55 sitzen. Alternativ ist es denkbar, als Dämpfer in der Anfahrkupplung 55 auch ein Zweimassenschwungrad oder eine gedämpfte Kupplungsscheibe einzusetzen. Für die Anfahrkupplung 55 und die Trennkupplung 11 können sowohl konventionelle Kupplungen oder selbst nachstellende Kupplungen (SAC) eingesetzt werden. Eine Betätigung der Trennkupplung 11 kann auch mit dem deckelfesten Ausrücker erfolgen. Vorteilhaft kann die Fliehkraftpendeleinrichtung 51 auch bei Verwendung eines nachgeschalteten Stufenautomatgetriebes mit oder ohne Wandler oder einem nachgeschalteten Doppelkupplungsgetriebe eingesetzt werden.

**Bezugszeichenliste**

| | | | |
|---|---|---|---|
| 1 | Drehmomentübertragungseinrichtung | 47 | Rotor |
| 3 | erste Schwungmasse | 49 | Elektromaschine |
| 5 | zweite Schwungmasse | 51 | Fliehkraftpendeleinrichtung |
| 7 | Verbrennungsmotor | 53 | Gegendruckplatte |
| 9 | Flansch | 55 | Anfahrkupplung |
| 11 | Trennkupplung | 57 | Zwischenwellenlager |
| 13 | dritte Schwungmasse | 59 | Lagerblech |
| 15 | Kupplungsbeläge | 61 | Gehäuseteil |
| 17 | Druckplatte | 63 | Gehäuse |
| 19 | hydraulische Betätigungseinrichtung | 65 | Verschraubung |
| 21 | Energiespeichereinrichtung | 67 | Stufe |
| 23 | Blechteile | 69 | Erregereinrichtung |
| 25 | Fettraum | 71 | Drehachse |
| 27 | Bogenfedern | 73 | fettfreier Raum |
| 29 | Ausgangsflansch | 75 | Pendelmasse |
| 31 | Nabe | 77 | Pendelmasse |
| 33 | Zwischenwelle | 79 | Trägerflansch |
| 35 | Zwischenflansch | 81 | Deckel |
| 37 | erstes Pilotlager | 83 | Ausrücker |
| 39 | Kurbelwelle | 85 | Gegendruckplatte |
| 41 | zweites Pilotlager | 87 | Kupplungsbeläge |
| 43 | Getriebeeingangswelle | 89 | Kupplungsscheibe |
| 45 | Getriebe | 91 | Kupplungsnabe |

## Patentansprüche

1. Drehmomentübertragungseinrichtung (1) mit:
- einer einem Verbrennungsmotor (7) drehfest zuordenbaren ersten Schwungmasse (3),
- einer der ersten Schwungmasse (3) nachgeschalteten und einem Getriebe (45) zuordenbaren zweiten Schwungmasse (5),
wobei die zweite Schwungmasse (5) einen Rotor (47) einer Elektromaschine (49) zum Übertragen eines elektrisch erzeugbaren Drehmoments auf die zweite Schwungmasse (5) aufweist,
und **dadurch gekennzeichnet, dass** die zweite Schwungmasse
eine Fliehkraftpendeleinrichtung (51) zum Reduzieren von Drehschwingungen aufweist.

2. Drehmomentübertragungseinrichtung nach dem vorhergehenden Anspruch, **dadurch gekennzeichnet, dass** die erste Schwungmasse (3) und die zweite Schwungmasse (5) mittels einer Energiespeichereinrichtung (21) einander relativ verdrehbar zuordenbar oder zugeordnet sind.

3. Drehmomentübertragungseinrichtung nach einem der vorhergehenden Ansprüche, **dadurch gekennzeichnet, dass** zwischen die erste Schwungmasse (3) und die zweite Schwungmasse (5) eine Trennkupplung (11) geschaltet ist.

4. Drehmomentübertragungseinrichtung nach einem der vorhergehenden Ansprüche, **dadurch gekennzeichnet, dass** mittels der Energiespeichereinrichtung (21) der zweiten Schwungmasse (5) zum Einspeichern oder Abgeben von Energie eine dritte Schwungmasse (13) relativ verdrehbar zugeordnet ist.

5. Drehmomentübertragungseinrichtung nach dem vorhergehenden Anspruch, **dadurch gekennzeichnet, dass** mittels der Trennkupplung (11) die dritte Schwungmasse (13) der ersten Schwungmasse (3) zuordenbar und von dieser trennbar ist.

6. Drehmomentübertragungseinrichtung nach einem der vorhergehenden Ansprüche, **dadurch gekennzeichnet, dass** der Rotor (47) der Elektromaschine (49) die Fliehkraftpendeleinrichtung (51) aufweist.

7. Drehmomentübertragungseinrichtung nach einem der vorhergehenden Ansprüche, **dadurch gekennzeichnet, dass** die Fliehkraftpendeleinrichtung (51) radial außerhalb einer Zwischenwelle (33) der zweiten Schwungmasse (5) angeordnet ist.

8. Drehmomentübertragungseinrichtung nach einem der vorhergehenden Ansprüche, **dadurch gekennzeichnet, dass** der zweiten Schwungmasse (5) zumindest ein Element der folgenden Gruppe nachgeschaltet ist: eine Anfahrkupplung (55), ein Schaltgetriebe, ein Stufenautomatgetriebe, ein Stufenautomatgetriebe mit Wandler, ein Doppelkupplungsgetriebe, ein CVT Getriebe.

9. Drehmomentübertragungseinrichtung nach einem der vorhergehenden Ansprüche, **dadurch gekennzeichnet, dass** die Fliehkraftpendeleinrichtung (51) axial benachbart zu einem starren Schwungrad, insbesondere einer Gegendruckplatte (53), der Anfahrkupplung (55) angeordnet ist.

10. Drehmomentübertragungseinrichtung nach einem der vorhergehenden Ansprüche, **dadurch gekennzeichnet, dass** die Fliehkraftpendeleinrichtung (51) axial zwischen der Anfahrkupplung (55) und der Elektromaschine (49) angeordnet ist.

## Claims

1. Torque transmission device (1) having:
- a first flywheel mass (3) which can be assigned fixedly to an internal combustion engine (7) so as to rotate with it,
- a second flywheel mass (5) which is connected downstream of the first flywheel mass (3) and can be assigned to a transmission (45),
the second flywheel mass (5) having a rotor (47) of an electric machine (49) for transmitting a torque which can be generated electrically to the second flywheel mass (5),
and **characterized in that** the second flywheel mass has a centrifugal-forced pendulum device (51) for reducing torsional vibrations.

2. Torque transmission device according to the preceding claim, **characterized in that** the first flywheel mass (3) and the second flywheel mass (5) can be assigned or are assigned such that they can be rotated relative to one another by means of an energy store device (21).

3. Torque transmission device according to either of the preceding claims, **characterized in that** a separating clutch (11) is connected between the first flywheel mass (3) and the second flywheel mass (5).

4. Torque transmission device according to one of the preceding claims, **characterized in that** a third flywheel mass (13) is assigned in a relatively rotatable manner to the second flywheel mass (5) for storing or outputting energy by means of the energy store device (21).

5. Torque transmission device according to the preceding claim, **characterized in that** the third flywheel mass (13) can be assigned to and disconnected from the first flywheel mass (3) by means of the separating clutch (11).

6. Torque transmission device according to one of the preceding claims, **characterized in that** the rotor (47) of the electric machine (49) has the centrifugal-force pendulum device (51).

7. Torque transmission device according to one of the preceding claims, **characterized in that** the centrifugal-force pendulum device (51) is arranged radially outside an intermediate shaft (33) of the second flywheel mass (5).

8. Torque transmission device according to one of the preceding claims, **characterized in that** at least one element from the following group is connected downstream of the second flywheel mass (5): a start-up clutch (55), a manual gearbox, a multi-step reduction automatic gearbox, a multi-step reduction automatic gearbox with converter, a double clutch gearbox, a CVT gearbox.

9. Torque transmission device according to one of the preceding claims, **characterized in that** the centrifugal-force pendulum device (51) is arranged axially adjacently with respect to a rigid flywheel, in particular a counterpressure plate (53), of the start-up clutch (55).

10. Torque transmission device according to one of the preceding claims, **characterized in that** the centrifugal-force pendulum device (51) is arranged axially between the start-up clutch (55) and the electric machine (49).

## Revendications

1. Dispositif de transmission de couple (1) comprenant :
- une première masse d'inertie (3) pouvant être associée de manière solidaire en rotation à un moteur à combustion interne (7),
- une deuxième masse d'inertie (5) montée en aval de la première masse d'inertie (3) et pouvant être associée à une transmission (45),
la deuxième masse d'inertie (5) présentant un rotor (47) d'un moteur électrique (49) pour le transfert, à la deuxième masse d'inertie (5), d'un couple pouvant être généré électriquement et **caractérisé en ce que** la deuxième masse d'inertie présente un dispositif de pendule à force centrifuge (51) pour réduire les oscillations.

2. Dispositif de transmission de couple selon la revendication précédente, **caractérisé en ce que** la première masse d'inertie (3) et la deuxième masse d'inertie (5) peuvent être associées ou sont associées l'une à l'autre de manière à pouvoir tourner l'une par rapport à l'autre au moyen d'un dispositif accumulateur d'énergie (21).

3. Dispositif de transmission de couple selon l'une quelconque des revendications précédentes, **caractérisé en ce qu'**entre la première masse d'inertie (3) et la deuxième masse d'inertie (5) est monté un embrayage de coupure (11).

4. Dispositif de transmission de couple selon l'une quelconque des revendications précédentes, **caractérisé en ce qu'**une troisième masse d'inertie (13) est associée, au moyen du dispositif accumulateur d'énergie (21), à la deuxième masse inertie (5) de manière à pouvoir tourner par rapport à elle en vue d'accumuler ou de délivrer de l'énergie.

5. Dispositif de transmission de couple selon la revendication précédente, **caractérisé en ce que** la troisième masse d'inertie (13) peut être associée à la première masse d'inertie (3) et être séparée de celle-ci au moyen de l'embrayage de coupure (11).

6. Dispositif de transmission de couple selon l'une quelconque des revendications précédentes, **caractérisé en ce que** le rotor (47) du moteur électrique (49) présente le dispositif de pendule à force centrifuge (51).

7. Dispositif de transmission de couple selon l'une quelconque des revendications précédentes, **caractérisé en ce que** le dispositif de pendule à force centrifuge (51) est disposé radialement à l'extérieur d'un arbre intermédiaire (33) de la deuxième masse d'inertie (5).

8. Dispositif de transmission de couple selon l'une quelconque des revendications précédentes, **caractérisé en ce que** la deuxième masse d'inertie (5) est suivie d'au moins un élément du groupe suivant : un embrayage de démarrage (55), une boîte de changement de vitesses, une boîte de vitesses automatique étagée, une boîte de vitesses automatique étagée avec un convertisseur, une boîte de vitesses à double embrayage, une boîte de vitesses à transmission à variation continue.

9. Dispositif de transmission de couple selon l'une quelconque des revendications précédentes, **caractérisé en ce que** le dispositif de pendule à force centrifuge (51) est disposé axialement à côté d'un volant d'inertie, en particulier d'un plateau de contre-pression (53), de l'embrayage de démarrage (55).

10. Dispositif de transmission de couple selon l'une quelconque des revendications précédentes, **caractérisé en ce que** le dispositif de pendule à force centrifuge (51) est disposé axialement entre l'embrayage de démarrage (55) et le moteur électrique (49).
